Europäisches Patentamt

European Patent Office

Office européen des brevets

(11) Veröffentlichungsnummer: **0 474 061 A1**

# EUROPÄISCHE PATENTANMELDUNG

(21) Anmeldenummer: **91114153.9**

(22) Anmeldetag: **23.08.91**

(51) Int. Cl.5: **G11B 5/66**, G11B 5/68, G11B 5/70, G11B 5/716, G11B 5/80

(30) Priorität: **06.09.90 DE 4028202**

(43) Veröffentlichungstag der Anmeldung:
**11.03.92 Patentblatt 92/11**

(84) Benannte Vertragsstaaten:
**DE DK FR GB IT NL**

(71) Anmelder: **BASF Magnetics GmbH
Dynamostrasse 3
W-6800 Mannheim 1(DE)**

(72) Erfinder: **Kovacs, Jenoe, Dr.
Kantstrasse 9
W-6717 Hessheim(DE)**
Erfinder: **Ohlinger, Manfred, Dr.
Anselm-Feuerbach-Strasse 13
W-6710 Frankenthal(DE)**
Erfinder: **Steuerwald, Manfred
Weidenstrasse 3b
W-6710 Frankenthal(DE)**

(74) Vertreter: **Langfinger, Klaus-Dieter, Dr. et al
BASF AG Carl-Bosch-Strasse 38
W-6700 Ludwigshafen(DE)**

(54) **Transferfolie mit Magnetschichten.**

(57) Die Erfindung betrifft Transferfolien, im wesentlichen bestehend aus einer Trägerfolie, einer Trennschicht und einer von dieser Trennschicht ablösbaren, aus zwei Magnetschichten aufgebauten Transferschicht und die gegebenenfalls auf der zweiten Magnetschicht eine zur Festlegung der Transferschicht auf einem Substrat dienende Klebeschicht aufweisen, wobei die beiden Magnetschichten jeweils ein magnetisierbares Material mit unterschiedlicher Koerzitivfeldstärke enthalten.

EP 0 474 061 A1

Die Erfindung betrifft Transferfolien, im wesentlichen bestehend aus einer Trägerfolie, einer Trennschicht und einer von dieser Trennschicht ablösbaren, aus zwei Magnetschichten aufgebauten Transferschicht und die gegebenenfalls auf der zweiten Magnetschicht eine zur Festlegung der Transferschicht auf einem Substrat dienende Klebeschicht aufweisen.

Transferfolien, auch Prägefolien genannt, werden bei der Herstellung von Kreditkarten, Gutscheinen, Bahnkarten, Parkausweisen, Personalausweisen usw. verwendet. Sie bestehen aus einer Trägerfolie und einer von dieser ablösbaren Übertragungslage, welche aus mindestens einer Magnetschicht aus einer Dispersion magnetisierbarer Teilchen in mindestens einem Bindemittel besteht. Gegebenenfalls kann die Transferfolie auf der der Trägerfolie abgekehrten Seite eine zur Festlegung der Übertragungslage an einem Substrat dienende Klebeschicht tragen.

Prägefolien, insbesondere Heißprägefolien, mit einer Magnetschicht sowie verschiedenen Schichten, die mechanisch beschreibbar sind, werden in der DE-B 3422911 beschrieben. Aus der US-A 4 376 006 ist bekannt, auf der zur Trägerfolie weisenden Seite der Magnetschicht eine Metallschicht und eine Lackschicht vorzusehen. Durch diese Ausbildung soll die Möglichkeit geschaffen werden, eine Magnet-Prägefolie auch in hellen Farben zu gestalten, wozu die im allgemeinen dunkle Magnetschicht von der Metallschicht abgedeckt wird. Mit einem derartigen Vorgehen werden rein dekorative Zwecke verfolgt.

In ähnlicher Weise wird gemäß der WO 87/06745 vorgegangen. Auch hier wird auf der zur Trägerfolie weisenden Seite der Magnetschicht eine Deckschicht aufgebracht, welche durch ihre Undurchsichtigkeit die auf bzw. in dem Informationsträger vorhandenen speziell angeordneten magnetischen und unmagnetischen Spuren abdecken sollen. Zum Zwecke der Fälschungssicherheit lassen sich außerdem noch beugungsoptische Strukturen sowie Hologramme in die Transferschicht einbauen. Um die mechanische Stabilität gegen Abnutzung zu erhöhen, sind gemäß der WO 87/06745 noch zusätzliche Schichten, die nichtmagnetische Stoffe beinhalten, erwähnt.

Um die Fälschungssicherheit von entsprechenden Dokumenten zu verbessern, wird in der US-A 3 566356 vorgeschlagen zwei magnetische Materialien mit unterschiedlichen Anisotropieeigenschaften als Mischung in einer oder getrennt in zwei Magnetschichten einzuarbeiten. Als Parameter zum Nachweis der Echtheit werden die Entmagnetisierungskurven herangezogen. Mit demselben Ziel wird ein ähnlicher Lösungsvorschlag in der US-A 3986205 offenbart.

Zur Vereinheitlichung von Aufzeichnungen und zur Sicherstellung der Wiedergabe von Informationen auf Magnetkarten, haben diese jedoch der internationalen Norm, 150 7811/2-1985, zu genügen, in der u. a. sogenannte Lesespannungskurven vorgeschrieben sind. Diese Kurven müssen in bestimmten Schreibstrombereichen definierte Lesespannungswerte erreichen, die man als Fensterbereich bezeichnet. Ohne diese Lesespannungswerte können die standardisierten Schreib-Lesegeräte nicht ohne Fehler arbeiten. Die erwähnte ISO-Vorschrift gibt Angaben für niederkoerztive Pigmente mit einem Hc-Wert von ca. 300 Oersted (23,9 kA/m). Für hochkoezitive Pigmente, die für ID-Karten zunehmend eingesetzt werden, gibt es z. Z. noch keine ISO-Vorschrift. Die vorhandene Schreib-Lesegeräte sind jedoch so eingestellt, daß die Lesespannungskurven etwa die Werte erreichen, die in der ISO-Normschrift ISO 7811/2 vorgegeben sind.

Es bestand daher die Aufgabe, für solche Magnetkarten Transferfolien bereitzustellen, die sowohl für niederkoerzitive als auch für hochkoerzitive Schreib-Lesegeräte geeignet sind und trotzdem die in der ISO-Vorschrift definieren Lesespannungswerte erreichen. Die gespeicherten Signale sollen außerdem durch die von den üblichen elektrischen Geräten erzeugten Magnetfeldern nicht gestört werden können.

Es wurde nun gefunden, daß Transferfolien, im wesentlichen bestehend aus einer Trägerfolie, einer Trennschicht und einer von dieser Trennschicht ablösbaren, aus zwei Magnetschichten aufgebauten Transferschicht die gestellten Aufgaben erfüllen, wenn die erste, der Trennschicht benachbarte Magnetschicht als magnetisierbares Material ein solches mit einer Koerzitivfeldstärke zwischen 20 und 85 kA/m und die zweite Magnetschicht ein magnetisierbares Material mit einer Koerzitivfeldstärke zwischen 200 und 500 kA/m enthält und beide magnetisierbare Materialien aus einen feinteiligen Pulver mit einer spezifischen Teilchenoberfläche von mindestens 20 m$^2$/g bestehen sowie beide Magnetschichten eine remanente Magnetisierung von mindestens 130 mT aufweisen.

Als magnetisches Material für die erste, auf dem Trägermaterial und der Trennschicht der Transferfolie aufgebrachte Magnetschicht eignet sich insbesondere Chromdioxidmaterialien, welche die geforderten Eigenschaften aufweisen. Eingearbeitet in das Bindemittel und die üblichen Zusatzstoffe weisen sie bereits bei Schichtdicken zwischen 5 und höchstens 12 $\mu$m die geforderte remanente Magnetisierung auf. Ein weiterer Vorteil, der durch die Verwendung von Chromdioxidmaterial ermöglicht wird, ist die gute Ausrichtbarkeit der nadelförmigen Teilchen, wodurch sich in einfacher Weise die remanente Magnetisierung anheben läßt. Je höher jedoch die remanente Magnetisierung ist, um so geringer kann die Dicke der Magnetschicht sein und trotzdem die in der ISO-Norm vorgeschriebenen Lesespannungswerte erreicht werden. Diese Dicke der Magnetschicht mit dem niederkoerzitiven Material spielt insofern eine Rolle, da diese Schicht nach dem Übertragen der Transferfolie auf das Kartensubstrat die obere, die hochkoerzitive Schicht überdeckende Schicht darstellt und deswegen so gering als möglich sein sollte.

Für die auf der Transferfolie befindliche obere Magnetschicht eignen sich insbesondere Barium- und/oder Strontiumferrite als magnetische Materialien. Bei Schichtstärken von 8 $\mu$m und darüber lassen sich die geforderten Werte für die remanente Magnetisierung problemlos erreichen. Da bei der Nutzung der Transferfolie, d. h. bei der Übertragung auf ein Magnetkartensubstrat, diese hochkoerzitive Magnetschicht unter der vorgenannten Magnetschicht mit niedrigerer Koerzitivfeldstärke angeordnet ist, wird die Schichtstärke der z. B. Barium- und/oder Strontiumferrite enthaltenden Magnetschicht auch von der Schichtdicke der sie überdeckenden anderen Magnetschicht mitbestimmt, da der remanente Fluß unmittelbar in die Lesespannungswerte eingeht. Diese müssen jedoch für beide Magnetschichten nach ihrer Übertragung auf das Substrat gemäß ISO-Norm derart sein, daß bei einem Aufsprechstrom zwischen 350 und 500 % des Referentwertes die Signalamplitude der Lesespannung zwischen 80 und 130 % des Referentsignals ist.

Die erfindungsgemäßen Transferfolien genügen, übertragen auf das Endsubstrat, in hervorragender Weise diesen Anforderungen. Da sich bei den Magnetschichten der erfindungsgemäßen Transferfolien problemlos die erforderlichen remanenten Magnetisierungen erhalten lassen und deshalb die einzelnen Magnetschichten auch sehr dünn einstellen lassen, ergibt sich bei der Anwendung der erfindungsgemäßen Transferfolien ein besonderer Vorteil dadurch, daß über den Magnetschichten harte, hochvernetzte und/oder leitende Deckschichten oder Abdeckfolien aufgebracht werden können, ohne daß die Werte für die Lesespannung nicht mehr normgerecht sind.

Die organischen Bindemittel, die für die Herstellung der magnetisierbaren Schichten verwendet werden, sind Polyvinylformale, Polyurethanelastomere, Mischungen von Polyisocyanaten und höhermolekularen Polyhydroxylverbindungen und Vinylchlorid-Polymerisaten mit über 60 % an VinylchoridMolekülbausteinen, z. B. Vinylchlorid-Copolymerisate mit Vinylestern von Monocarbonsäuren mit 2 bis 9 C-Atomen, Estern von aliphatischen Alkoholen mit 1 bis 9 C-Atomen und ethylenisch ungesättigten Carbonsäuren mit 3 bis 5 C-Atomen, wie die Ester der Acrylsäure, Methacrylsäure oder Maleinsäure, oder diesen Carbonsäuren selbst als Comonomere sowie hydroxylgruppenhaltige Vinylchlorid-Copolymerisate, die durch partielle Verseifung von Vinylchlorid-Vinylester-Copolymerisaten oder direkte Copolymerisaten von Vinylchlorid mit hydroxylhaltigen Monomeren, wie Allylalkohol oder 4-Hydroxybutyl- oder 2-Hydroxyethyl(meth)-acrylat hergestellt werden können. Ferner sind als Bindemittel geeignet Abmischungen der angegebenen Zusammensetzung. Bevorzugte Bindemittel sind Polyvinylformal-Binder, Polyurethanelastomer-Abmischungen der genannten Art, vor allem mit Polyvinylformalen. Als Polyurethanelastomer-Binder werden handelsübliche elastomere Polyurethane aus Adipinsäure, 1,4-Butandiol und 4,4'-Diisocyanatodiphenylmethan bevorzugt angewandt. Als organisches Lösungsmittel eignen sich für die Herstellung der Dispersion die hierfür bekannten organischen Lösungsmittel, insbesondere aromatische Kohlenwasserstoffe, wie Benzol, Toluol oder Xylol, Alkohole wie Propanol oder Butanol, Ketone wie Aceton, Methylethylketon, Ether wie Tetrahydrofuran oder Dioxan, sowie Gemische solcher Lösungsmittel.

Die in den Magnetschichten enthaltenen Dispergierhilfsmittel sind Kammblockcopolymere, aufgebaut aus einer Polyethylenimin-Kette als Grundgerüst mit einem Molekulargewicht von mindestens 2000, zweckmäßigerweise 6000 bis 25000 und mit Seitenketten auf Polyester-und/oder Polyamidbasis mit jeweiligen Molekulargewichten von mindestens 500, zweckmäßigerweise 800 bis 2000. Diese Kammblockcopolymeren sind an sich bekannt und u. a. in der GB-A 2 153 804 beschrieben. Daneben kann es vorteilhaft sein, noch weitere Dispergierhilfsmittel, wie aliphatische Säuren mit 12 bis 18 Kohlenstoffatomen, deren Metallseifen, deren fluorierte Ester-Derivate sowie deren Amide oder auch Alkylenoxid-Alkylphosphorsäure-ester, Lecithin oder quartäre Ammoniumsulfate von Trialkylpolyolefinoxid sowie höhere Alkohole mit 12 oder mehr Kohlenstoffatomen und ihre Schwefelsäureester zu verwenden. Die Menge an Kamblockcopolymeren in der magnetisierbaren Schicht beträgt 1 bis 10, vorzugsweise 3 bis 6 Gew. %, bezogen auf die Menge an magnetisierbarem Material.

Neben den beschriebenen Bestandteilen können noch anorganische Füllstoffe wie Ruß, $TiO_2$, Zinnoxid und ähnliche in einer Konzentration von 1 bis 15, bevorzugt 2 bis 10 Gew. %, bezogen auf die Menge an magnetisierbarem Material, eingesetzt werden.

Außerdem ist es üblich, Lackadditive wie Tributoxyethylenphosphat oder langkettige Ester wie Stearate in einer Konzentration von 0,2 bis 2 %, bevorzugt 0,2 bis 1 Gew. % zuzugeben.

Die Herstellung der erfindungsgemäßen Transferfolien geschieht im wesentlichen nach bekannten Methoden. So wird zunächst die Trägerfolie, im allgemeinen eine Polyethylenterephthalatfolie mit einer Trennschicht in einer Dicke von 0,1 bis 0,5 μm überzogen. Diese Trennschicht besteht meist aus Polyvinylalkylcarbamat, Polyglycerinstearat, Polyvinyloctadecylether oder ähnlicher hierfür bekannten Verbindungen.

Auf diese Trennschicht werden dann die magnetischen Schihten nacheinander aufgetragen. Sie bestehen aus Dispersionen der angegebenen Zusammensetzungen. Gegebenenfalls kann es angebracht sein, vor dem Auftragen der Magnetschichten noch spezielle Deckschichten herzustellen, welche nach dem Übertragen der Transferfolie auf das für den Informationsträger vorgesehene Substrat die Oberflächenschicht bilden. Die Deckschichten bestehen zweckmäßigerweise aus einer vernetzten Polymermatrix, die feinverteilt anorganische Pigmente enthält, wodurch die Schicht nicht nur eine größere mechanische Stabilität, sondern auch einen geringen Oberflächenwiderstand aufweist. Als anorganische Pigmente lassen sich beispielsweise Ruß, Zinndioxid, Lithiumchlorid und die bekannten, zur Ausbildung leitfähiger Zentren befähigten Stoffen verwenden. Diese Materialien werden in einer Lösung des polymeren Bindemittels in bekannter Weise dispergiert und nach dem Dispergieren in einer Schichtstärke zwischen 0,2 und 5,0, vorzugsweise zwischen 0,3 und 2,0 μm, mittels Dispersionsgießern aufgetragen und in der bekannten Art vernetzt. Geeignete Bindemittel sind u. a. die bekannten allein oder in Abmischungen eingesetzten Polyurethane, Epoxidharze, Polyvinylalkoholderivate, Vinylchloridcopolymerisate, Nitrocellulose, Polyester, Polyester mit Sulfonatgruppen, Polymere mit Acrylatgruppen, welche sich durch chemische oder Elektronenstrahlvernetzung härten lassen.

Je nach Verwendungszweck kann gegebenenfalls auf die Magnetschichten noch eine Klebschicht aufgebracht werden, mit der die Magnetschichten der Transferfolie später auf einem Substrat, bevorzugt Hartpapier, befestigt werden kann.

Die Erfindung sei anhand der folgenden Beispiele näher erläutert.

## Beispiel A

In eine 250 1-Kugelmühle wurden 400 kg Stahlkugeln mit einem Durchmesser von 4 bis 6 mm sowie 40 Teile eines $CrO_2$-Pigmentes mit einer Koerzitivfeldstärke von 29,1 kA/m und einer spezifischen Oberfläche von 28 $m^2$/g sowie 1,0 Teile von Zn-Oleat eingebracht. Anschließend wurden noch 2,67 Teile einer 20 %igen Phenoxyharzlösung sowie 17.07 Teile einer 12,5 %igen Polyurethanlösung, 0,27 Teile Tributoxyethylenphosphat zusammen mit 34,93 Teilen des Lösungsmittelgemisches THF/Dioxan ( = 1:1) zugeführt.

Die Mischung wurde dann 3 Tage gekugelt.

Danach wurden wiederum 5,33 Teile der Phenoxyharzlösung, 34,13 Teile der Polyurethanlösung, 0,67 Teile Dioctylazetat und 1,87 Teile des Lösungsmittelgemisches THF/Dioxan (1:1) zugegeben. Die Dispersion wurde danach nochmals 24 Stunden gekugelt.

Eine 11,5 μ Polyesterfolie wurde zunächst unter Anwendung einer Rasterwalze mit einer 0,5 %igen Antihaftlösung aus Polyvinylalkoholcarbamat beschichtet. Die Schichtstärke lag bei 0,3 μ. Auf diese Schicht wurde dann eine 7,5 μm dicke Schicht mit dieser Dispersion aufgebracht. Die so entstandene Transferfolie wies eine Koerzitivfeldstärke von 27,0 kA/m und eine Remanenz von 177 mT auf.

Die Transferfolie wurde danach auf eine Kreditkarte nach ISO-Norm 7811 übertragen. Die Lesespannung der Karte lag genau auf dem Niveau des Referenzbandes. Die mechanische Stabilität der Magnetfolie war sehr hoch. Mit einem Codier- und Lesegerät, Typ MCS 1000 der Firma MID's, Herne/Westfalen, konnten 5000 Durchläufe durchgeführt werden, ohne daß die Schicht beschädigt wurde.

## Beispiel B

In einer 250 1-Kugelmühle wurden 400 Teile Stahlkugeln mit einem Durchmesser von 4 - 6 mm sowie 60 Teile eines Strontiumferrit-Pigmentes mit einer Koerzitivfeldstärke von 307 kA/m und einer BET-Oberfläche von 22,5 $m^2$/g und 3,60 Teile Ruß, eingesetzt. Anschließend wurden noch 10 Teile einer Phenoxyharzlösung, 20 %ig in Tetrahydrofuran/Dioxan sowie 64,0 Teile einer Polyurethanlösung 12,5 %ig, 3,84 Teile Kammpolymeres aus Polyiminbasiskette und Polyesterseitenketten mit einem Gesamtmolgewicht von 60 000 50 %ig in Tetrahydrofuran, 0,4 Teile Tributoxyethylenphosphat, 100 %ig, 0,2 Teile Dioctylacetat zusammen mit 12,08 Teilen des Lösungsmittelgemisches aus gleichen Teilen Tetrahydrofuran und Dioxan eingebracht.

Die Mischung wurde dann 4 Tage gekugelt. Die fertige Dispersion wurde aus der Kugelmühle über ein 5 μm Filtertuch in Kannen filtriert.

Eine 15,0 μm Polyesterfolie wurde zunächst unter Anwendung einer Rasterwalze mit einer 0,5 %igen Antihaftlösung aus Polyvinylalkoholcarbamat beschichtet. Die Schichtstärke lag bei 0,3 μm. Auf diese Schicht wurde dann mit einem Messergießer eine 1,6 μm starke Deckschicht, bestehend aus 30 Teilen Ruß, dispergiert in einem in gleichen Teilen Tetrahydrofuran und Dioxan gelösten Bindemittel auf Polyester-, Polyurethan- und Phenoxiharzbasis, aufgebracht. Danach erfolgte die Beschichtung mit der Strontiumferrit-Dispersion. Die Schichtstärke lag bei 11,5 μm. Der so entstandene Magnetstrei-

fen wies eine Koerzitivfeldstärke von 325 kA/m und eine Remanenz von 165 mT auf. Die Lesespannungskurve lag auf dem Niveau des Referenzbandes.

Beispiel 1

Zur Herstellung einer Zweischichten-Transferfolie wurde zuerst auf eine 15,0 μm Polyesterfolie, wie in Beispiel B beschrieben, eine 0,3 μm Trennschicht und eine 1,5 μm starke rußhaltige Deckschicht aufgebracht. Anschließend wurde eine Magnetschicht mit der Dispersion gemäß Beispiel B aufgebracht. Die Schichtdicken waren 7,2 μm für die erste und 12,5 μm für die zweite Schicht. Die so erhaltene Transferfolie wurde danach auf eine Kreditkarte nach ISO-Norm 7811 übertragen, die maximale Lesespannung der Karte lag im LoCo-Bereich, gemessen mit einem Rinasgerät, bei 8,0 Volt. Die maximale Lesespannung im HiCo-Bereich lag bei 7,5 Volt.

Beispiel 2

Es wurde wie im Beispiel 1 vorgegangen, wobei eine Chromdioxidschicht von 4,5 μm und eine Strontiumferritschicht von 13 μm eingestellt wurde. Die maximale Lesespannung im LoCo-Bereich lag danach bei 4,5 Volt und im HiCo-Bereich bei 9,5 Volt und damit unter bzw. über Standardwerten.

**Patentansprüche**

1. Transferfolie, im wesentlichen bestehend aus einer Trägerfolie, einer Trennschicht und einer von dieser Trennschicht ablösbaren, aus zwei Magnetschichten aufgebauten Transferschicht, dadurch gekennzeichnet, daß die erste der Trennschicht benachbarte Magnetschicht als magnetisierbares Material ein solches mit einer Koerzitivfeldstärke zwischen 20 und 85 kA/m und die zweite Magnetschicht ein magnetisierbares Material mit einer Koerzitivfeldstärke zwischen 200 und 500 kA/m enthält und daß beide magnetisierbaren Materialien aus einem feinteiligen Pulver mit einer spezifischen Teilchenoberfläche von mindestens 20 m$^2$/g bestehen sowie daß beide Magnetschichten eine remanente Magnetisierung von mindestens 130 mT aufweisen.

2. Transferfolie gemäß Anspruch 1, dadurch gekennzeichnet, daß die erste Magnetschicht ein Chromdioxid mit einer Koerzitivfeldstärke von 20 bis 85 kA/m sowie eine Schichtstärke von 5 bis 12 μm und die zweite Magnetschicht einen Barium- und/oder Strontiumferrit mit einer Koerzitivfeldstärke von 200 bis 500 kA/m sowie eine Schichtstärke von mehr als 8 μm aufweist.

Europäisches
Patentamt

**EUROPÄISCHER RECHERCHENBERICHT**

Nummer der Anmeldung

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| | **EINSCHLÄGIGE DOKUMENTE** | | EP 91114153.9 |
| A | DE - A - 3 705 006 <br> (NIPPON TELEGRAPH AND TELE- <br> PHONE CORP.) <br> * Fig. 1-8; Ansprüche 1,8,9 * <br> -- | 1,2 | G 11 B 5/66 <br> G 11 B 5/68 <br> G 11 B 5/70 <br> G 11 B 5/716 <br> G 11 B 5/80 |
| A | GB - A - 1 488 483 <br> (EMI LTD.) <br> * Fig. 1; Anspruch 1 * <br> -- | 1 | |
| D,A | US - A - 3 986 205 <br> (FAYLING) <br> * Zusammenfassung; Fig. 4,5 * <br> ---- | 1,2 | |

**RECHERCHIERTE SACHGEBIETE (Int. Cl.⁵)**

G 11 B 5/00
G 11 B 25/00
G 06 K 19/00
B 32 B 31/00

Der vorliegende Recherchenbericht wurde für alle Patentansprüche erstellt.

| Recherchenort | Abschlußdatum der Recherche | Prüfer |
|---|---|---|
| WIEN | 21-11-1991 | BERGER |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82